# EUROPÄISCHE PATENTSCHRIFT

(11) **EP 0 577 686 B1**
(45) Veröffentlichungstag und Bekanntmachung des Hinweises auf die Patenterteilung: **12.10.1994**
(21) Anmeldenummer: 92907598.4
(22) Anmeldetag: 02.04.1992
(51) Int. Cl.: B60H 1/00, A47C 7/74, G07B 13/04

(54) **FAHRZEUGSITZ**
VEHICLE SEAT
SIEGE DE VEHICULE

(30) Priorität: 03.04.1991 DE 4110702
(43) Veröffentlichungstag der Anmeldung: 12.01.1994
(73) Patentinhaber: ROBERT BOSCH GMBH, 70442 Stuttgart (DE)
(72) Erfinder: GERSTENMAIER, Jürgen, D-7141 Beilstein (DE); SCHMID, Hans-Dieter, D-8500 Nürnberg (DE); HAUBNER, Georg, D-8431 Berg (DE); MEIER, Werner, D-8540 Igelsdorf (DE)
(86) Internationale Anmeldenummer: DE9200263
(87) Internationale Veröffentlichungsnummer: WO9217344

(56) Entgegenhaltungen:
- US-A- 4 881 456
- Patent Abstracts of Japan, Vol.13, No.258 (M-838) 15 june 1989 & JP,A,1063417
- Patent Abstracts of Japan, Vol.08, No.37 (m-277) (1474) 17 Feb 1984 &JP,A,58194612
- Patent Abstracts of Japan, Vol.9, No.34 (M-357) (1757) 14 Feb 85 & JP,A,59176109
- Patent Abstracts of Japan, Vol.13, No.446 (M-877) (3794) 06 Oct 89 & JP,A, 1172008

## Beschreibung

### Stand der Technik

Die Erfindung betrifft einen Fahrzeugsitz nach dem Oberbegriff des Anspruchs 1.

Zwecks Erhöhung des Fahrzeugkomforts ist es bekannt, einen Fahrzeugsitz beheizbar auszugestalten. Er verfügt dazu über eine in die Sitzfläche integrierte Heizwicklung, die gegebenenfall unter Zwischenschaltung eines Schalters nach Bedarf oder automatisch, in Abhängigkeit von der Temperatur, mit der Batterie des Fahrzeugs verbindbar ist. Der Minuspol der Heizwicklung liegt an Massepotential. Der Pluspol liegt in Reihe mit einem Temperaturzweipunktregler. Bei einigen Fahrzeugen ist der Pluspol zusätzlich mit einem Ein-Aus-Schalter versehen.

Insbesondere in Verbindung mit Rückhaltemitteln für Fahrzeuginsassen, wie zum Beispiel Gurten und/oder Airbag-Systemen, sind weiter Mittel zur Feststellung der Anwesenheit eines Fahrzeuginsassen bekannt. Derartige Einrichtungen sind von besonderer Bedeutung bei mit sogenannten passiven Rückhaltemitteln, wie beispielsweise einem Airbag-System, ausgestatteten Fahrzeugen, die im Gefahrenfall ohne menschliches Zutun aktiviert werden. Eine Aktivierung ist auch im Gefahrenfall nämlich nur dann notwendig, wenn der betreffende Fahrzeugsitz tatsächlich von einem Fahrzeuginsassen eingenommen ist. Ein überflüssiges Auslösen eines beispielsweise für einen Beifahrer vorgesehenen Airbag-Systems bei leerem Beifahrersitz würde zu erheblichen Kosten im Zusammenhang mit der Wiederinstand-Setzung der Airbag-Bauelemente führen.

Auch bei einem belegten Fahrzeugsitz können Mittel zur Sitzbelegungserkennung zweckmäßig zur Feststellung dienen, ob der jeweilige Fahrzeuginsasse eine systemgerechte Sitzposition innehat oder nicht. Diese Feststellung kann im Falle eines Unfalls als Entscheidungskriterium dafür herangezogen werden, ob ein Airbag-System überhaupt oder gegebenenfalls erst etwas später ausgelöst wird, um eine mögliche Verletzungsgefahr des Fahrzeuginsassen infolge einer falschen Sitzposition zu verhindern oder zumindest zu reduzieren. Schon im Vorfeld einer Unfallsituation könnte jedoch eine falsche Sitzposition über geeignete Anzeigemittel, wie beispielsweise eine Warnlampe oder einen Signalgenerator angezeigt werden.

Aus US-A1-3 863 209 ist ein Fahrzeugsitz bekannt, der einen in der Sitzfläche angeordneten lastabhängigen Schalter aufweist. Bei Belegung des Sitzes mit einem Fahrzeuginsassen ändert dieser Schalter seinen Schaltzustand und kann beispielsweise einen Stromkreis schließen. Bei diesem Schalter handelt es sich um ein von einer Sitzheizung unabhängiges Bauelement.

Um Personen im Schließbereich von Türen zu erkennen, ist eine kapazitive Messung mit Oszillatoren aus DE-OS 30 44 789 bekannt. Die Person begibt sich zwischen die Kapazitätselektroden eines Luftkondensators und erhöht dadurch die Kapazität des Oszillatorkondensators. Die Oszillatorfrequenz nimmt ab.

Aus US-A1-4 885 566 ist weiter eine Einrichtung bei einem Fahrzeug bekannt, die es ermöglicht, das Anlegen eines Sicherheitsgurts zu überprüfen. Diese Einrichtung sieht eine Sitzelektrode und eine bzw. zwei Gurtelektroden vor. Ein belegter Sitz wird durch Kapazitätserhöhung zwischen Sitzelektrode und Gurtelektrode bzw. Kapazitätserhöhung zwischen den beiden Gurtelektroden erkannt. Die Schwingungsfrequenz des Schwingkreises ist von der Sitzbelegung durch einen Fahrzeuginsassen abhängig. Auch bei dieser bekannten Einrichtung ist die in dem Fahrzeugsitz angeordnete Elektrode kein Bestandteil einer Sitzheizung.

Aus DE 36 35 644 C2 ist eine Sitzelektrode bekannt, die mit der Fahrzeugkarosserie als Gegenelektrode (= Masse) einen Kondensator darstellt. Der Kondensator erhöht durch einen Beifahrer seine Kapazität. Der Oszillator erniedrigt bei belegtem Sitz seine Frequenz. Es ist ein Zähler-Speicher vorgesehen, der während einer festen Zeit von 0.1 sek die Oszillatorimpulse zählt und über den Speicher seriell an den Mikrocomputer weitergibt. Es wird nicht die absolute Kapazität, sondern deren momentane Änderung ausgewertet.

Aus dem vorveröffentlichten Dokument JP-A-1 063 417 ist weiter ein Fahrzeugsitz mit einer elektrischen Sitzheizung bekannt, bei dem zur Erkennung der Sitzbelegung kapazitive Sensoren mit Elektroden vorgesehen sind.

### Vorteile der Erfindung

Der Fahrzeugsitz mit den kennzeichnenden Merkmalen des Anspruchs 1 hat demgegenüber zahlreiche Vorteile. Dadurch, daß zumindest Teile einer bereits vorhandenen Sitzheizung als Mittel zur Erkennung der Sitzbelegung dienen, läßt sich ein besonders einfacher und damit auch preiswerter konstruktiver Aufbau eines Fahrzeugsitzes realisieren. Dem Fahrzeughersteller bleibt es dabei überlassen, ob er alle denkbaren Ausstattungsvarianten verwirklicht, also Sitzheizung und Sitzbelegungserkennung oder, ob er nur die Möglichkeit der Sitzbelegungserkennung oder die Möglichkeit der Sitzheizung wählt. Gegebenenfalls sind bei zunächst einfacheren Austattungsvarianten mit dem universell ausgestatteten Fahrzeugsitz auch durch spätere Nachrüstungen noch komfortablere Ausstattungsmerkmale zu erzielen.

Die heute üblicherweise eingebaute Sitzheizung führt immer Karosseriepotential. Eine weitere Elektrode zwischen Sitzheizung und Fahrzeuginsassen kann nur in geringem Abstand zur Sitzheizung eingebaut werden, um die Wärme möglichst rasch an die Sitzoberfläche zu bringen. Eine Elektrode unterhalb der Sitzheizung hätte nur geringe Wirkung. Bei einer Flächenelektrode von 0,25 qm und einem Abstand von 1 mm mit einer relativen Dielektrizitätskonstanten von 2 ergibt eine Grundkapazität von ca. 4400 pF. Die Kapazitätsänderung bei Sitz plus Fahrzeuginsasse ergibt eine Kapazitätszunahme von 10 bis 60 pF je nach Größe und Gewicht. Die Anmeldung sieht daher eine Lösung vor, die keine oder nur eine sehr geringe Kapazitätserhöhung vorsieht. Dies wird dadurch erreicht, daß die Sitzheizung selbst als Elektrode verwendet wird, wobei diese während des Meßvorganges 2-polig in unmittelbarer Nähe zum Widerstandsdraht der Heizung abgeschaltet. wird. Die Abschaltung erfolgt dabei nur z. B. alle 5 sek. für 5msek, so daß die Aufheizung nicht verzögert wird.

Besonders zweckmäßig ist es, bei einer einen durch Stromdurchgang aufheizbaren Leiter umfassenden elektrischen Sitzheizung den Leiter zumindest als Teil eines Sensors zur Erkennung der Sitzbelegung auszugestalten. Dabei ist der Leiter der Sitzheizung insbesondere als erste Elektrode eines kapazitiven Sensors ausgebildet. In einem besonders vorteilhaften Ausführungsbeispiel ist der durch Stromdurchgang aufheizbare Leiter der Sitzheizung drahtförmig ausgebildet während die zweite Elektrode eines kapazitiven Sensors als ein die erste Elektrode stellenweise kreuzender Leiter ausgestaltet ist. Dabei kann der durch Stromdurchgang aufheizbare Leiter der Sitzheizung insbesondere mäanderförmig verlaufend in der Sitzfläche des Fahrzeugsitzes angeordnet sein. Die Kreuzungsstellen zwischen den beiden die Elektroden des kapazitiven Sensors darstellenden Leitern werden zweckmäßig matrixartig angeordnet, und zwar derart, daß in einem Ausführungsbeispiel der Erfindung die Anzahl der Kreuzungsstellen pro Flächeneinheit konstant ist. Im Bedarfsfall kann jedoch die Anzahl der Kreuzungsstellen auch von Flächenelement zu Flächenelement variabel ausgestaltet sein, um so beispielsweise Besonderheiten in der Anordnung des aufheizbaren Leiters zu berücksichtigen oder auch um eine besondere Empfindlichskeitscharakteristik zu erzielen. Beispielsweise kann nämlich der durch Stromdurchgang aufheizbare und in Mäanderform verlegte Leiter der Sitzheizung mit unterschiedlichen Windungsabständen verlegt sein, um beispielsweise im Außenbereich des Fahrzeugsitzes eine höhere Heizleistung zu erzeugen als in dessen Innenbereich. Durch eine unterschiedliche Dichte der Kreuzungsstellen könnte schließlich auch noch die Beeinflußbarkeit der Elektrodenkonfiguration durch einen als Dielektrikum wirkenden Fahrzeuginsassen veränderlich ausgestaltet werden. Um einen galvanischen Kontakt der sich kreuzenden Leiter im Bereich der Kreuzungsstellen auszuschließen, werden die Leiter zumindest im Bereich der Kreuzungsstellen zweckmäßig durch Isoliermittel voneinander getrennt. Abgesehen von ihrer Isolierwirkung sichern die Isoliermittel zugleich eine definierte Ausrichtung der beiden Elektroden und ermöglichen dadurch auch eine hinreichende mechanische Stabilität der Elektrodenanordnung. Schließlich wird durch die Isoliermittel auch der Abstand der beiden Leiter in den Kreuzungsbereichen konstant gehalten, was wiederum für die Konstanz des Kapazitätswertes des durch die jeweilige Leiterkreuzung gebildeten Teilkondensators von Bedeutung ist. In einem besonders vorteilhaften Ausführungsbeispiel der Erfindung haben die Isoliermittel die Gestalt von zum Beispiel aus Glas oder aus einem anderen Isolierstoff bestehenden Isolierperlen, die im Bereich der Kreuzungsstellen die beiden Leiter bzw. Elektroden im wesentlichen punktförmig umschließen. In einem weiteren Ausführungsbeispiel der Erfindung wird nur die, gegebenenfalls vermaschte oder vernetzte zweite Elektrode mit gleichmäßig beabstandet angeordneten Isolierperlen versehen und dann bei der Montage auf einer im wesentlichen streifenförmige Abschnitte aufweisenden ersten Elektrode angeordnet.

In einem weiteren Ausführungsbeispiel der Erfindung bestehen die Elektroden aus sich kreuzenden Leitern oder Folienstreifen, die auf gegenüber liegenden Seiten einer flächigen Isolierfolie angeordnet sind. Obgleich diese Anordnung sehr flexibel ist, was ihrer Verwendung im Zusammenhang mit einer Sitzfläche eines Fahrzeugsitzes sehr entgegenkommt, ist dennoch auf einfache Weise ein konstanter Abstand zwischen den Elektroden sichergestellt. Die Messung sollte im Ein-Prozent-Genauigkeitsbereich erfolgen. Dadurch ist die Messung mit einem 8-bit-Zähler möglich, wie er in preisgünstigen Mikrocomputern vorgesehen ist. Die Sitzkapazität wird durch Anpassung der Meßzeit an die Oszillatorfrequenz bestimmt. Der Zählerinhalt ist bei nicht belegtem Sitz immer 128 + 1. Der Wert für belegt bzw. nicht belegt bezieht sich immer auf den Zählerwert 128. Die Abweichung bei belegtem Sitz hat somit nahezu immer die gleiche Anzahl von Inkrementen. Das Auswerteprogramm ist somit für alle Sitze gleich.

### Zeichnung

Ausführungsbeispiele der Erfindung sind in der Zeichnung dargestellt und in der nachfolgenden Beschreibung näher erläutert. Figur 1 zeigt eine elektrische Sitzheizung, die unmittelbar am Sitz ein 2-Schließer-Relais (Transistoren) für die Zu- und Abschaltung in einer Steuerelektronik vorsieht. Bei offenem Relais dient die Sitzheizung als Meßelektrode; Figur 2 zeigt ein erstes Ausführungsbeispiel einer Elektrodenanordnung, Figur 2a ein weiteres Ausführungsbeispiel einer Elektrodenanordnung, Figur 3 ein Blockschaltbild eines Schaltkreises mit einen kapazitiven Sensor bildenden Elektroden, Figur 4 ein weiteres Ausführungsbeispiel einer Elektrodenanordnung, Figur 5 einen Querschnitt durch die Sitzfläche eines beheizbaren Fahrzeugsitzes, Figur 6 ein Ablaufdiagramm und Figur 7 ein Blockschaltbild.

### Beschreibung der Ausführungsbeispiele

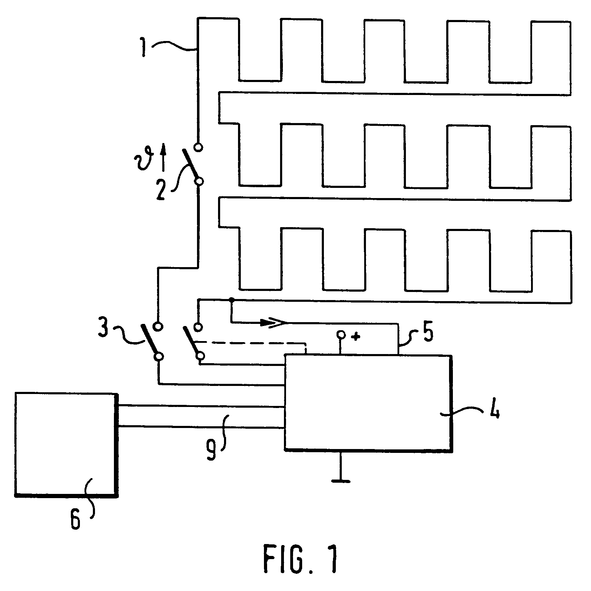

Figur 1 zeigt eine elektrische Widerstands-Sitzheizungs-Elektrode, die über das Relais 3 bei belegtem Sitz an Spannung liegt. Das Zu- und Abschalten erfolgt durch den in Reihe zum Widerstandsdraht liegenden Zweipunkttemperaturregler 2. Die Widerstandselektrode liegt über dem Elektrodenabgriff 5 an einer Auswerteelektronik 4. Die Auswerteelektronik 4 besteht neben einem Mikrocomputer und dem Relais 3.1 aus einem Oszillator 7, den Datenaustauschleitungen 9 zwischen dem Hauptprozessorsteuergerät 6 und dem Mikrocomputer-Sensorgerät 4. Der Mikrocomputer-Sensor schaltet bei Heizung zwecks Ermittlung einer Sitzbelegung kurzzeitig das Relais aus und mißt die Oszillatorfrequenz. Ein wiederholtes Zuschalten erfolgt nur, wenn die Messung ergeben hat, daß der Sitz belegt ist.

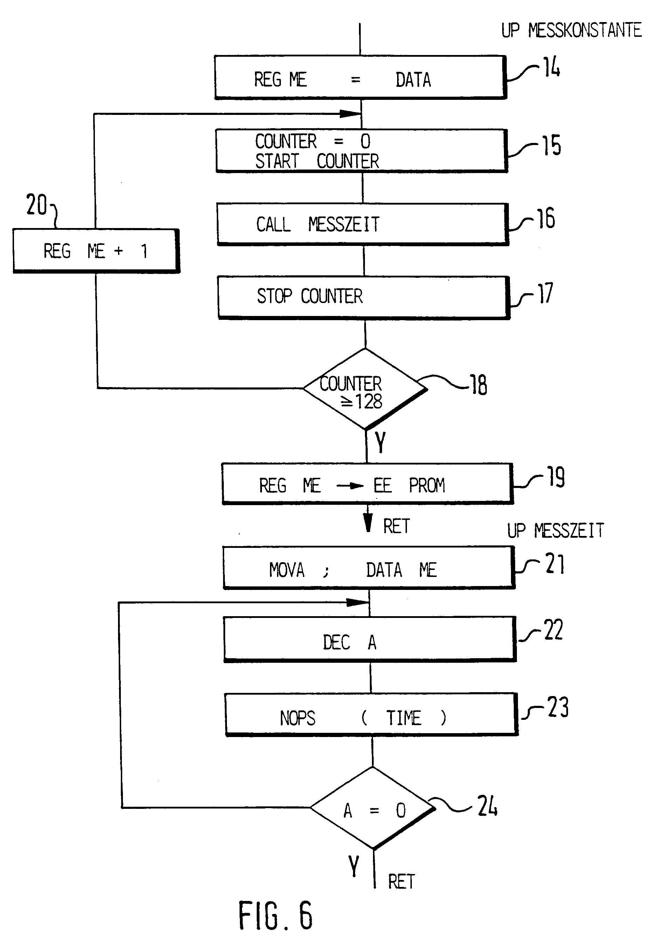

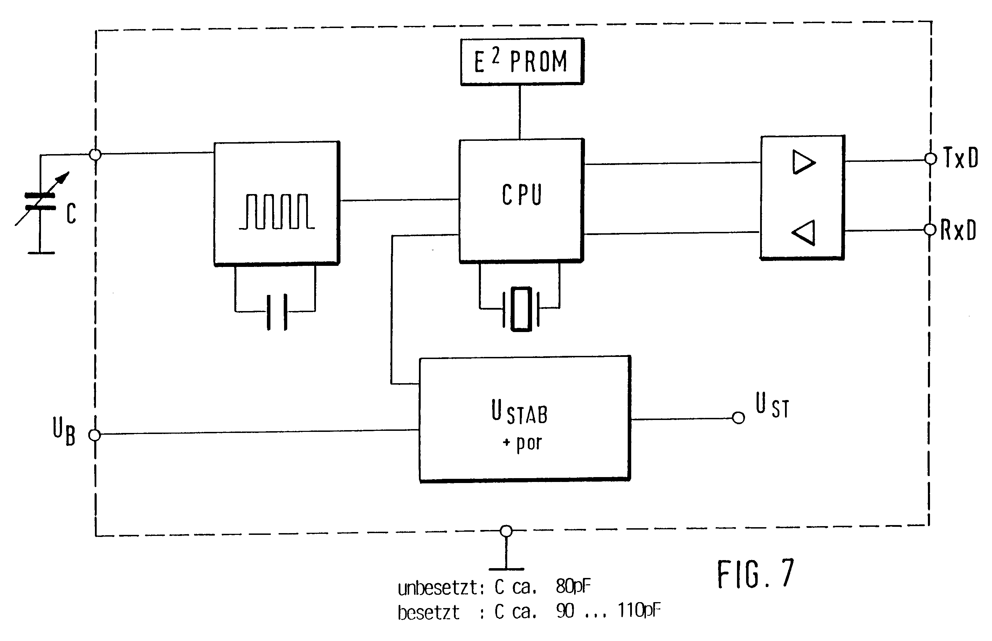

Figur 7 zeigt ein Blockschaltbild und Figur 6 ein Flußdiagramm für das Lernen der Sitzkapazität. Das Lernen erfolgt nur bei nichtbelegtem Sitz und wird vom Zentralsteuergerät 4 veranlaßt. Das Register ME wird mit einem Grundzeitwert geladen, der bei minimaler Sitzkapazität den Zähler auf einen Wert <128 hoch zählt 14. Mit dem Meßbeginn wird der Zähler mit dem Wert 0 geladen und gestartet 15. Jetzt wird eine Meßzeit abgearbeitet, während die Impulse in den Zähler einlaufen 16. Dann wird der Zähler gestoppt 17. Eine Prüfung des Zählerinhalts auf den Wert = < 128 erfolgt in 18. Ist der Wert < 128 erfolgt ein Sprung nach 20 und das Meßzeitregister ME wird um 1 erhöht. Ist der Meßwert = 128 + 1, so wird der Wert des Registers ME in einem EEPROM abgespeichert 20.

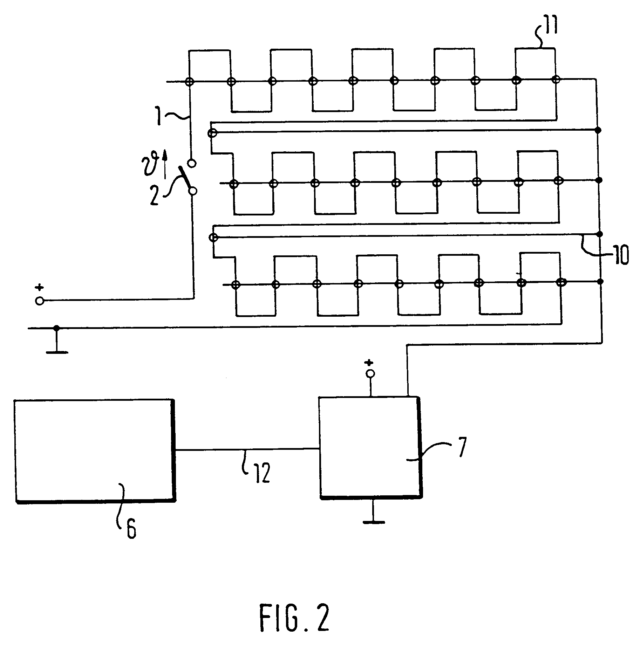

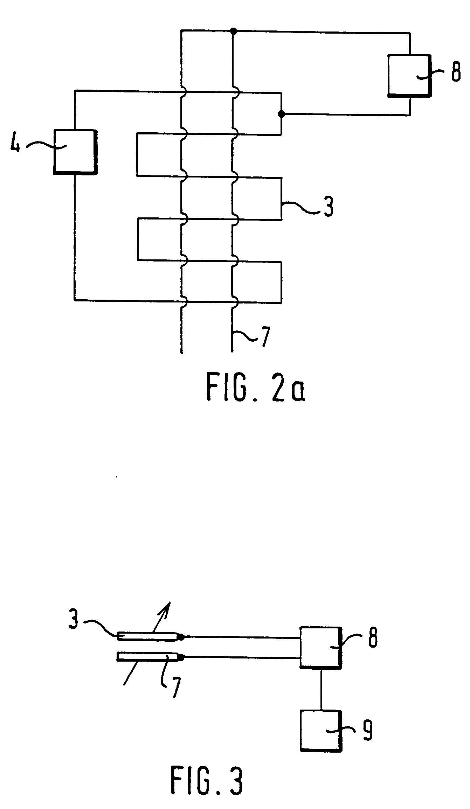

Im Unterprogramm Meßzeit wird der Registerinhalt ME im Akku gespeichert 21. In 22 wird der Akku fortlaufend dekrementiert. Die folgendene NOPS erhöhen die Meßzeit 23. Ist der Aku 0, so ist die Meßzeit in 24 beendet. Ist der Akkuwert < 0, erfolgt ein Sprung nach 22. Das Steuergerät 6 wiederum ist für die Auslösung von passiven Rückhaltemitteln zuständig und sorgt dafür, daß eine Auslösung dieser Rückhaltemittel bei einem Unfall nur dann stattfindet, wenn der zu sichernde Sitz jeweils von einem Fahrzeuginsassen belegt ist. Bei Fahrzeugen, die mit Airbag-Systemen für Fahrer und Beifahrer ausgestattet sind, kann dadurch sichergestellt werden, daß bei einem Unfallvorgang der für den Beifahrer vorgesehene Airbag bei unbelegtem Beifahrersitz nicht ausgelöst wird. Dadurch wiederum lassen sich hohe Reparaturkosten für ein unnötigerweise betätigtes Airbag-System einsparen. Durch die Doppelausnutzung des Leiters 3 der elektrischen Sitzheizung als Elektrode eines Sensors für Mittel zur Erkennung der Sitzbelegung ergibt sich eine besonders einfache und damit kostengünstige und dennoch vielseitig verwendbare Konstruktion des Fahrzeugsitzes. Der Hersteller des Fahrzeugsitzes kann beispielsweise jeden Fahrzeugsitz nach Maßgabe des erfindungsgemäßen Vorschlags ausgestalten. Es bleibt dann dem Fahrzeughersteller überlassen, ob er in seinem Fahrzeug jeweils eine elektrische Sitzbeheizung und gleichzeitig eine Sitzbelegungserkennung vorsieht oder ob er in einer weniger komfortablen Ausgestaltung nur eine elektrische Sitzbeheizung oder nur eine Sitzbelegungserkennung vorsieht. Es kann auch in einer Grundausstattung zunächst nur jeweils eine elektrische Sitzbeheizung oder eine Sitzbelegungserkennung eingeplant sein. Die jeweils zusätzlichen Ausstattungsmerkmale lassen sich auch durch spätere Nachrüstung noch verwirklichen, indem die in Figur 2 schematisch dargestellten Steuergeräte angeschlossen werden. Ein die Konstruktion des Fahrzeugsitzes 1 verändernder Eingriff ist nicht mehr erforderlich. Durch die enge räumliche Nachbarschaft der einen kapazitiven Sensor bildenden Leiter 3 und 7 ergibt sich eine mechanisch robuste und gegenüber Störeinflüssen wenig anfällige Sensorkonstruktion. Dies gilt insbesondere im Vergleich zu aus dem Stand der Technik bekannten kapazitiven Sensoren, die neben einer im Fahrzeugsitz angeordneten ersten Elektrode beispielsweise die Karosserie des Fahrzeugs als Gegenelektrode ausnützen. Durch Veränderung von Umweltbedingungen und/oder durch Veränderung der Sitzposition von Fahrzeuginsassen treten bei dieser bekannten Elektrodenkonfiguration Störeinflüsse wesentlich stärker hervor als bei der erfindungsgemäß vorgeschlagenen Elektrodenanordnung.

Figur 2 zeigt die Anordnung der Sitzheizung 1 mit einem Reihenschalter 13 und Zweipunktregler 2 für die Regelung der Sitztemperatur. Eine feste parallel liegende Elektrode 5 mit Kreuzungsdrähten 10 und freiliegenden Elektrodendrähten 11 bestimmt mit der Streukapazität zur Sitzheizung und zur Karosserie die Oszillatorfrequenz des Oszillators 7. Ein zentrales Steuergerät 6 ist mit einer Leitung 12 mit dem Oszillator 7 verbunden und mißt ständig die Oszillatorfrequenz. Die Zusatzbelastung durch die Elektrode 5, 10, 11 liegt im Bereich < 10 pF. Das Zu- und Abschalten der Sitzheizung bringt eine Meßwertänderung im Oszillatorzähler von < = 1 digit.

In einem bevorzugten ersten Ausführungsbeispiel ist der als erste Elektrode dienende Leiter 3 drahtförmig ausgebildet und, wie in Figur 2 dargestellt, mäanderförmig in der Sitzfläche 2 des Fahrzeugsitzes 1 angeordnet. Die zweite Elektrode 7 des kapazitiven Sensors ist ebenfalls in Gestalt eines drahtförmigen Leiters ausgebildet, der den ersten Leiter 3 stellenweise kreuzt. An den Kreuzungsstellen sind die Elektroden 3, 7 zweckmäßig durch Isoliermittel derart voneinander isoliert, daß sich keine galvanische Verbindung ergibt. Vorteilhaft wird durch die Isoliermittel auch eine Lagefixierung der Elektroden 3, 7 zueinander erreicht. Insbesondere wird durch die Isoliermittel auch ein konstanter Abstand der Elektroden 3, 7 im Bereich der Kreuzungsstellen sichergestellt, so daß sich ein konstanter Kapazitätswert der durch die Überkreuzungen der Elektroden 3, 7 gebildeten Kondensatoren ergibt.

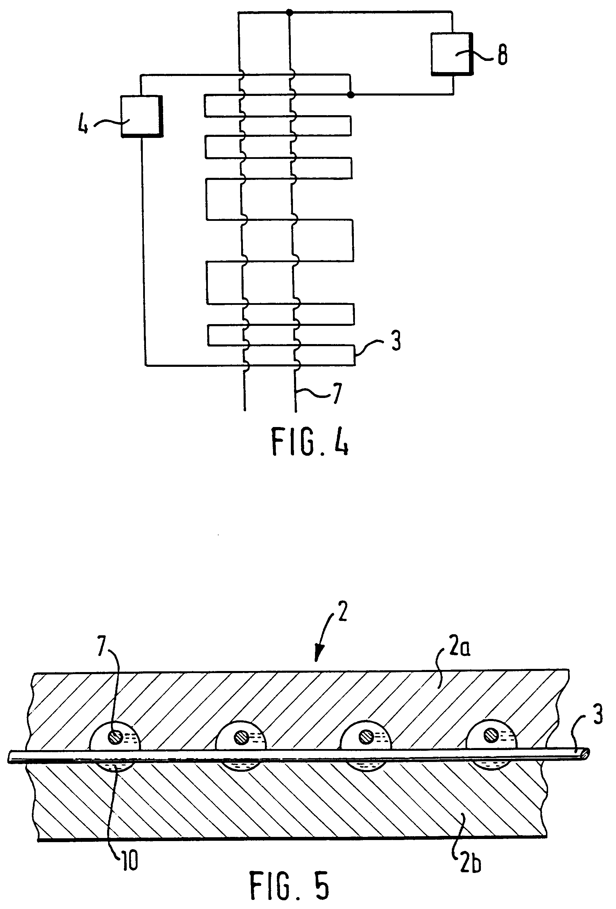

Wie insbesondere aus Figur 5 ersichtlich ist, können die Isoliermittel als aus einem Isolierwerkstoff, wie beispielsweise Glas, bestehende Isolierperlen 10 ausgestaltet sein, die die mit geringem Abstand voneinander angeordneten Elektroden 3, 7 im Bereich der Kreuzungsstellen umfassen. Durch die dabei entstehende Vermaschung bzw. Vernetzung der Elektroden 3, 7 ergibt sich eine mechanisch belastbare jedoch vergleichsweise flexible Anordnung, die auf besonders einfache Weise in die zum Beispiel aus einem Untergewebe 2b und einem Obergewebe 2a besehende Sitzfläche 2 des Fahrzeugsitzes 1 integrierbar ist (Figur 5). Wie aus Figur 2 ersichtlich ist, sind die Kreuzungsstellen zwischen den Elektroden 3, 7 matrixförmig angeordnet und, zumindest in einem Ausführungsbeispiel der Erfindung, derart innerhalb der Sitzfläche verteilt, daß sich eine gleiche Anzahl von Kreuzungsstellen pro Flächeneinheit der Sitzfläche ergibt. In einem anderen Ausführungsbeispiel der Erfindung, das anhand von Figur 4 erläutert ist, ist gegebenenfalls eine von Flächenelement zu Flächenelement veränderte Dichte der Kreuzungsstellen vorgesehen. Dies ergibt sich beispielsweise daraus, daß der als Bestandteil der elektrischen Sitzheizung vorgesehene Leiter 3 in diesem Ausführungsbeispiel ebenfalls mäanderförmig aber mit unterschiedlichem Windungsabstand verlegt ist. Eine derartige Anordnung ist beispielsweise dann zweckmäßig, wenn unterschiedlichen Bereichen der Sitzfläche 2 des Fahrzeugsitzes 1 eine unterschiedliche Heizleistung zuführbar sein soll. Beispielsweise kann daran gedacht werden, den Randbereichen der Sitzfläche eine größere Heizenergie zuzuführen. Durch eine derartige Variation der Dichte der Kreuzungsstellen zwischen den Elektroden 3, 7 läßt sich jedoch gegebenenfalls auch eine lokal unterschiedliche Beeinflußbarkeit der Sensoranordnung erreichen. Neben der Feststellung, daR der Fahrzeugsitz belegt ist oder nicht, können hierdurch gegebenenfalls auch noch Rückschlüsse auf die tatsächlich von dem Fahrzeuginsassen eingenommene Sitzposition gezogen werden. Dies ist besonders in jenen Anwendungsfällen vorteilhaft, bei denen eine optimale Schutzwirkung durch passive Rückhaltemittel nur bei einer idealen Sitzposition gewährleistet ist und bei einer davon abweichenden Sitzposition unter Umständen mit einer größeren Gefährung des Fahrzeuginsassen gerechnet werden muß. Gegebenenfalls kann durch geeignete Warneinrichtungen der Fahrzeuginsasse noch rechtzeitig auf eine ungünstige Sitzposition hingewiesen werden. Gegebenenfalls kann in einem weiteren Ausführungsbeispiel der Erfindung die Anordnung noch dadurch verfeinert werden, daR mehrere Elektroden 7 vorgesehen werden, die gegebenenfalls mit mehreren Steuergeräten 8 verbunden, jedenfalls aber unterschiedlichen Auswertekreisen zugeordnet sind.

In einem weiteren Ausführungsbeispiel ist der dem Heizkreis zugeordnete Leiter folienförmig ausgestaltet. Der die zweite Elektrode bildende Leiter ist wiederum drahtförmig ausgebildet und in bestimmten Abständen mit Isoliermittel in Gestalt von Isolierperlen umgeben, die eine eine galvanische Trennung garantierende Auflage auf der ersten Elektrode ermöglichen.

Schließlich umfaßt ein letztes Ausführungsbeispiel eine Elektrodenanordnung mit einer flächig ausgebildeten Isolierfolie, auf der beidseitig im wesentlichen streifenförmig ausgebildete und sich überkreuzende Elektroden angeordnet sind. Diese Ausführungsform einer Elektrodenanordnung ist besonder leicht herstellbar und dennoch mechanisch außerordentlich stabil. Sie eignet sich daher besonders gut für die Anordnung in einer Sitzfläche eines Fahrzeugsitzes, der über die Fahrzeuglebensdauer gesehen großen mechanischen Beanspruchungen ausgesetzt ist.

## Patentansprüche

1. Fahrzeugsitz mit einer elektrischen Sitzheizung und Mitteln zur Erkennung der Sitzbelegung, dadurch gekennzeichnet, daß zumindest Teile der Sitzheizung als Mittel zur Erkennung der Sitzbelegung dienen.

2. Fahrzeugsitz nach Anspruch 1, dadurch gekennzeichnet, daß die elektrische Sitzheizung einen durch Stromdurchgang aufheizbaren Leiter (3) umfaßt und daß dieser Leiter zumindest als Teil eines Sensors (3, 7) zur Erkennung der Sitzbelegung des Fahrzeugsitzes (1) ausgestaltet ist.

3. Fahrzeugsitz nach einem der Ansprüche 1, 2, dadurch gekennzeichnet, daß der Leiter (3) eine erste Elektrode eines mehrere Elektroden (3, 7) kapazitiven Sensors ist.

4. Fahrzeugsitz nach einem der Ansprüche 1 bis 3, dadurch gekennzeichnet, daß der Leiter (3) drahtförmig ausgebildet ist.

5. Fahrzeugsitz nach einem der Ansprüche 1 bis 4, dadurch gekennzeichnet, daß der Leiter (3) mäanderförmig verlaufend in der Sitzfläche (2) des Fahrzeugsitzes (1) angeordnet ist.

6. Fahrzeugsitz nach einem der Ansprüche 1 bis 5, dadurch gekennzeichnet, daß die zweite Elektrode (7) des kapazitiven Sensors (3, 7) als ein die erste Elektrode (3) stellenweise kreuzender Leiter (7) ausgebildet ist.

7. Fahrzeugsitz nach einem der Ansprüche 1 bis 6, dadurch gekennzeichnet, daß die Elektroden (3, 7) im Bereich ihrer Kreuzungsstellen durch Isoliermittel derart voneinander getrennt sind, daß sich zwischen ihnen keine galvanische Verbindung ergibt.

8. Fahrzeugsitz nach einem der Ansprüche 1 bis 7, dadurch gekennzeichnet, daß als Isoliermittel aus einem isolierenden Werkstoff, wie beispielsweise Glas, bestehende Isolierperlen (10) vorgesehen sind, die die Elektroden (3, 7) im Bereich ihrer Kreuzungsstellen umschließen.

9. Fahrzeugsitz nach einem der Ansprüche 1 bis 8, dadurch gekennzeichnet, daß die Kreuzungsstellen der Elektroden (3, 7) in einer Matrix angeordnet sind.

10. Fahrzeugsitz nach einem der Ansprüche 1 bis 9, dadurch gekennzeichnet, daß die Anzahl der Kreuzungsstellen pro Flächeneinheit der Sitzfläche (2) des Fahrzeugsitzes konstant ist.

11. Fahrzeugsitz nach einem der Ansprüche 1 bis 9, dadurch gekennzeichnet, daß die Anzahl der Kreuzungsstellen der Elektroden (3, 7) pro Flächeneinheit der Sitzfläche (2) des Fahrzeugsitzes variabel ist.

12. Fahrzeugsitz nach einem der Ansprüche 1 bis 11, dadurch gekennzeichnet, daß die Elektroden als sich kreuzende Folienstreifen sehr dünne beidseitig einer flächigen Isolierfolie angeordnet sind.

13. Fahrzeugsitz nach einem der Ansprüche 1 bis 12, dadurch gekennzeichnet, daß der Kapazitätswert des durch jede Kreuzungsstelle der Elektroden (3, 7) gebildeten Kondensators wesentlich kleiner als 1 Picofarad ist.

14. Fahrzeugsitz nach einem der Ansprüche 1 bis 13, dadurch gekennzeichnet, daß die Abschaltung der Sitzheizung in unmittelbarer Nähe der Widerstandsheizdicke 2polig erfolgt.

15. Fahrzeugsitz nach einem der Ansprüche 1 bis 14, dadurch gekennzeichnet, daß die Messung der Sitzheizungselektrodenkapazität durch Austaktung des 2poligen Relais in bestimmten Zeitabständen erfolgt.

16. Fahrzeugsitz nach einem der Ansprüche 1 bis 15, dadurch gekennzeichnet, daß die Zuschaltung der Sitzheizung nur bei "Sitz belegt" erfolgt.

17. Fahrzeugsitz nach einem der Ansprüche 1 bis 16, dadurch gekennzeichnet, daß der Kapazitätswert der Sitzelektrodenanordnung durch ein Lernprogramm ermittelt wird.

## Claims

1. Vehicle seat having an electric seat heater and means for detecting the seat occupation, characterized in that at least parts of the seat heater serve as means for detecting the seat occupation.

2. Vehicle seat according to Claim 1, characterized in that the electric seat heater comprises a conductor (3) which can be heated by passing current through it, and in that this conductor is constructed so as to be at least part of a sensor (3, 7) for detecting the seat occupation of the vehicle seat (1).

3. Vehicle seat according to one of Claims 1, 2, characterized in that the conductor (3) is a first electrode of a capacitive sensor comprising a plurality of electrodes (3, 7).

4. Vehicle seat according to one of Claims 1 to 3, characterized in that the conductor (3) is constructed in the shape of a wire.

5. Vehicle seat according to one of Claims 1 to 4, characterized in that the conductor (3) is arranged in the sitting area (2) of the vehicle seat (1) extending in a meandering fashion.

6. Vehicle seat according to one of Claims 1 to 5, characterized in that the second electrode (7) of the capacitive sensor (3, 7) is constructed as a conductor (7) which partly intersects the first electrode (3).

7. Vehicle seat according to one of Claims 1 to 6, characterized in that the electrodes (3, 7) are separated from one another in the region of their intersection points by insulating means in such a manner that no electrical connection exists between them.

8. Vehicle seat according to one of Claims 1 to 7, characterized in that insulating beads (10) which consist of an insulating material such as glass, for example, are provided as insulating means and envelop the electrodes (3, 7) in the region of their intersection points.

9. Vehicle seat according to one of Claims 1 to 8, characterized in that the intersection points of the electrodes (3, 7) are arranged in a matrix.

10. Vehicle seat according to one of Claims 1 to 9, characterized in that the number of intersection points per unit of area of the seat area (2) of the vehicle seat is constant.

11. Vehicle seat according to one of Claims 1 to 9, characterized in that the number of intersection points of the electrodes (3, 7) per unit area of the sitting area (2) of the vehicle seat is variable.

12. Vehicle seat according to one of Claims 1 to 11, characterized in that the electrodes are arranged as mutually intersecting, very thin strips of foil on both sides of a planar insulating film.

13. Vehicle seat according to one of Claims 1 to 12, characterized in that the capacitance value of the capacitor which is formed by each intersection point of the electrodes (3, 7) is considerably smaller than 1 picofarad.

14. Vehicle seat according to one of Claims 1 to 13, characterized in that the seat heater is switched off in the immediate proximity of the resistance-heating thickness in a double-pole fashion.

15. Vehicle seat according to one of Claims 1 to 14, characterized in that the capacitance of the seat-heater electrodes is measured at specific time intervals by blanking the double-pole relay.

16. Vehicle seat according to one of Claims 1 to 15, characterized in that the seat heater is connected to supply only in the case of "seat occupied".

17. Vehicle seat according to one of Claims 1 to 16, characterized in that the capacitance value of the seat electrode arrangement is determined by means of a learning program.

## Revendications

1. Siège de véhicule avec un chauffage électrique et des moyens de détection de l'occupation du siège, caractérisé en ce qu'au moins des parties du chauffage de siège servent de moyen de détection de l'occupation du siège.

2. Siège de véhicule selon la revendication 1, caractérisé en ce que le chauffage électrique de siège comprend un conducteur (3) chauffable par passage du courant et qu'on réalise ce conducteur au moins comme une partie d'un capteur (3, 7) destiné à détecter l'occupation du siège du siège de véhicule (1).

3. Siège de véhicule selon l'une des revendications 1, 2, caractérisé en ce que le conducteur (3) est la première électrode de plusieurs électrodes (3, 7) d'un capteur capacitif.

4. Siège de véhicule selon l'une des revendications 1 à 3, caractérisé en ce que le conducteur (3) est en forme de fil.

5. Siège de véhicule selon l'une des revendications 1 à 4, caractérisé en ce que le conducteur (3) est implanté en forme de méandre dans la surface d'assise (2) du siège de véhicule (1).

6. Siège de véhicule selon l'une des revendications 1 à 5, caractérisé en ce que la deuxième électrode (7) du capteur capacitif (3, 7) est sous forme d'un conducteur (7) croisant localement la première électrode (3).

7. Siège de véhicule selon l'une des revendications 1 à 6, caractérisé en ce que les électrodes (3, 7) dans le domaine de leurs croisements sont séparées l'une de l'autre par des moyens isolants de sorte qu'il n'y ait pas de liaison galvanique entre eux.

8. Siège de véhicule selon l'une des revendications 1 à 7, caractérisé en ce qu'on prévoit comme moyens isolants des perles isolantes (10) constituées de matériau isolant, comme du verre par exemple, qui entourent les électrodes (3, 7) dans le domaine de leurs croisements.

9. Siège de véhicule selon l'une des revendications 1 à 8, caractérisé en ce que les croisements des électrodes (3, 7) sont disposés sous forme de matrice.

10. Siège de véhicule selon l'une des revendications 1 à 5, caractérisé en ce que le nombre des croisements par unité de surface de la surface d'assise (2) du siège de véhicule est constant.

11. Siège de véhicule selon l'une des revendications 1 à 5, caractérisé en ce que le nombre des croisements des électrodes (3, 7) par unité de surface de la surface d'assise (2) du siège de véhicule est variable.

12. Siège de véhicule selon l'une des revendications 1 à 11, caractérisé en ce que les électrodes sont disposées sous forme de bandes de film très mince se croisant de chaque côté d'un film plan isolant.

13. Siège de véhicule selon l'une des revendications 1 à 12, caractérisé en ce que la valeur de capacité du condensateur formé par chaque croisement d'électrodes (3, 7) est essentiellement inférieure à 1 picoforad.

14. Siège de véhicule selon l'une des revendications 1 à 13, caractérisé en ce que le débranchement du chauffage de siège se fait par 2 pôles à proximité immédiate de l'épaisseur de chauffage par résistance.

15. Siège de véhicule selon l'une des revendications 1 à 14, caractérisé en ce qu'on réalise la mesure de la capacité d'électrode de chauffage de siège par ouverture du relais bipolaire à intervalles de temps déterminés.

16. Siège de véhicule selon l'une des revendications 1 à 15, caractérisé en ce que le branchement du chauffage de siège n'a lieu que si le siège est occupe.

17. Siège de véhicule selon l'une des revendications 1 à 16, caractérisé en ce qu'on détermine la valeur de capacité de l'implantation d'électrodes de siège par un programme d'apprentissage.
